(19) Europäisches Patentamt
European Patent Office
Office européen des brevets

(11) **EP 2 712 097 B1**

(12) **EUROPEAN PATENT SPECIFICATION**

(45) Date of publication and mention
of the grant of the patent:
**12.09.2018 Bulletin 2018/37**

(51) Int Cl.:
*H01Q 1/24* *(2006.01)*       *H01Q 21/28* *(2006.01)*
*H01Q 21/29* *(2006.01)*      *H04W 24/00* *(2009.01)*
*H04W 88/08* *(2009.01)*      *H04B 17/00* *(2015.01)*

(21) Application number: **11768461.3**

(22) Date of filing: **16.05.2011**

(86) International application number:
**PCT/CN2011/074090**

(87) International publication number:
**WO 2011/127850 (20.10.2011 Gazette 2011/42)**

(54) **METHOD AND DEVICE FOR POSITIONING FAULTY TOWER TOP DEVICE**

VERFAHREN UND VORRICHTUNG ZUR POSITIONIERUNG EINES FEHLERHAFTEN TURMOBERTEILS

PROCÉDÉ ET DISPOSITIF DE POSITIONNEMENT D'UN ÉQUIPEMENT DE TÊTE AYANT SUBI UN CLAQUAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.03.2014 Bulletin 2014/13**

(73) Proprietor: **Huawei Technologies Co., Ltd. Longgang District Shenzhen, Guangdong 518129 (CN)**

(72) Inventors:
• **WANG, Pingjing**
  **Shenzhen**
  **Guangdong 518129 (CN)**
• **ZHENG, Wei**
  **Shenzhen**
  **Guangdong 518129 (CN)**
• **SHEN, Jian**
  **Shenzhen**
  **Guangdong 518129 (CN)**
• **CHEN, Jianjun**
  **Shenzhen**
  **Guangdong 518129 (CN)**

(74) Representative: **Pfenning, Meinig & Partner mbB Patent- und Rechtsanwälte Theresienhöhe 11a 80339 München (DE)**

(56) References cited:
CN-A- 1 553 736       CN-Y- 2 854 941
US-A1- 2002 132 644       US-A1- 2010 113 097
US-B1- 6 169 451

**EP 2 712 097 B1**

**Description**

**TECHINICAL FIELD**

The present invention relates to the field of communications, and in particular, to a method and an apparatus for locating a faulty tower-top device.

**BACKGROUND**

A base station generally needs to monitor working states of tower-top devices. When not possessing an AISG (Antenna Interface Standards Group, antenna interface standards group) protocol communication function, the base station monitors the working state of a tower-top device by using CWA (Current Window Alarm, current window alarm). That is, the base station detects a working current value of the tower-top device, so as to judge the working state of the tower-top device.

At present, one base station can supply power for multiple tower-top devices. When not possessing the AISG protocol communication function, the base station can detect multiple tower-top devices' working currents and values, but cannot distinguish which tower-top device has caused a current change, and therefore cannot locate a faulty tower-top device.

US 2002/132644 A1 discloses a method and apparatus of transmitting a communication signal between a radio base station and a radiation element. The method includes receiving an input signal, then extracting a data signal from the input signal, wherein the data signal includes values representing operating parameters of devices at the radiation element, and producing a status signal for each device that simulates a feedback signal for the device.

US 2010/113097 A1 discloses an antenna transmission control device which has a base-station-side and an antenna-side multiplexer circuit. There is an alternating protocol transfer between these two multiplexer circuits to control components close to the antenna. The current-alarmed or protocol-alarmed signals present at the antenna-side terminals of the multiplexer provided on the antenna side can be measured or detected by the multiplexer circuits and supplied to the transmission link together with a terminal-dependent or load-dependent protocol.

**SUMMARY**

To enable a base station to locate a faulty tower-top device, embodiments of the present invention provide a method and an apparatus for locating a faulty tower-top device. The technical solution is as follows:

A method for locating a faulty tower-top device includes:

detecting a working current of each tower-top device in real time to obtain present current value information of each tower-top device; and

controlling, according to the present current value information of each tower-top device, a fake load configured to simulate the working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device;

wherein, the fake load includes a low dropout linear regulator, LDO, configuration resistors R1, R2 and R3, and a power consumption resistor R; the LDO includes an enable pin ENABLE pin, a standard feedback pin ADJ pin, an input pin VIN pin, an output pin OUT pin and a ground pin GND pin; the ENABLE pin is connected to a tower-bottom micro control unit, MCU; the tower-bottom MCU controls enabling and disabling of the LDO via the ENABLE pin; the VIN pin is connected to a base station; the base station provides the LDO with a power supply via the VIN pin; a current flowing through the VIN pin is a current $I_{vin}$ of the input port of the fake load, wherein the VIN pin is the input port of the fake load; R1 is connected between the ADJ pin and the OUT pin; R2 is connected between the ADJ pin and the GND pin; R3 is connected between the ADJ pin and the tower-bottom MCU; R is connected between the OUT pin and the GND pin; a current flowing through R is equal to $I_{vin}$ ; and the tower-bottom MCU provides the fake load with a control voltage $V_C$ via the R3 and the ADJ pin;

wherein the controlling, according to the present current value information of each tower-top device, a fake load configured to simulate the working current of the tower-top device to make a current of an input port of the fake load equal to the present current value information of the tower-top device comprises:

making, by the tower-bottom MCU, the current $I_{vin}$ of the input port of the fake load equal to the present current value information of the tower-top device by adjusting the control voltage $V_C$ of the fake load configured to simulate the working current of the tower-top device according to a first corresponding relation between the control voltage $V_C$ of the fake load and the current $I_{vin}$ of the input port of the fake load.

A method for locating a faulty tower-top device includes:

detecting a working current of each tower-top device in real time to obtain present current value information of each tower-top device; and

controlling, according to the present current value information of each tower-top device, a fake load configured to simulate the working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device;

wherein, the fake load includes a direct current switch power supply, configuration resistors R1, R2 and R3, and a power consumption resistor R; the direct current switch power supply includes an enable pin ENABLE pin, a standard feedback pin VSEN pin, an input pin VIN pin, a boot pin BOOT pin and a ground pin GND pin; the ENABLE pin is connected to a tower-bottom micro control unit, MCU; the tower-bottom MCU controls enabling and disabling of the direct current switch power supply via the ENABLE pin; the VIN pin is connected to a base station; the base station provides an LDO with a power supply via the VIN pin; a current flowing through the VIN pin is a current $I_{vin}$ of the input port of the fake load, wherein the VIN pin is the input port of the fake load; R1 is connected between the VSEN pin and the BOOT pin; R2 is connected between the VSEN pin and the GND pin; R3 is connected between the VSEN pin and the tower-bottom MCU; R is connected between the BOOT pin and the GND pin; and the tower-bottom MCU provides the fake load with a control voltage $V_C$ via the R3 and the VSEN pin;

wherein the controlling, according to the present current value information of each tower-top device, a fake load configured to simulate the working current of the tower-top device to make a current of an input port of the fake load equal to the present current value information of the tower-top device comprises:

making, by the tower-bottom MCU, the current $I_{vin}$ of the input port of the fake load equal to the present current value information of the tower-top device by adjusting the control voltage $V_C$ of the fake load configured to simulate the working current of the tower-top device according to a second corresponding relation between the control voltage $V_C$ of the fake load and the current $I_{vin}$ of the input port of the fake load.

An apparatus for locating a faulty tower-top device includes:

a tower-top module, configured to detect a working current of each tower-top device in real time to obtain present current value information of each tower-top device, and transmit the present current value information to a tower-bottom module; and the tower-bottom module, including a tower-bottom micro control unit, MCU, and a plurality of fake loads, configured to simulate a working current of each tower-top device respectively, where the tower-bottom MCU is configured to control, according to the present current value information of each tower-top device, a fake load configured to simulate the working current of the tower-top device to make a current of an input port of the fake load to equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device;

wherein, the fake load includes a low dropout linear regulator LDO, configuration resistors R1, R2 and R3, and a power consumption resistor R; the LDO includes an enable pin ENABLE pin, an standard feedback pin ADJ pin, an input pin VIN pin, an output pin OUT pin and a ground pin GND pin; the ENABLE pin is connected to the tower-bottom MCU; the tower-bottom MCU controls enabling and disabling of the LDO via the ENABLE pin; the VIN pin is connected to the base station; the base station provides the LDO with a power supply via the VIN pin; a current flowing through the VIN pin is a current $I_{vin}$ of the input port of the fake load, wherein the VIN pin is the input port of the fake load; R1 is connected between the ADJ pin and the OUT pin; R2 is connected between the ADJ pin and the GND pin; R3 is connected between the ADJ pin and the tower-bottom MCU; R is connected between the OUT pin and the GND pin; a current flowing through R is equal to $I_{vin}$; and the tower-bottom MCU provides the fake load with a control voltage $V_C$ via the R3 and the ADJ pin;

wherein the tower-bottom MCU comprises a first control unit configured to make the current $I_{vin}$ of the input port of the fake load equal to the present current value information of the tower-top device by adjusting the control voltage

$V_C$ of the fake load configured to simulate the working current of the tower-top device according to a first corresponding relation between the control voltage $V_C$ of the fake load and the current $I_{vin}$ of the input port of the fake load.

An apparatus for locating a faulty tower-top device includes:

a tower-top module, configured to detect a working current of each tower-top device in real time to obtain present current value information of each tower-top device, and transmit the present current value information to a tower-bottom module; and

the tower-bottom module, including a tower-bottom micro control unit, MCU, and a plurality of fake loads configured to simulate the working current of each tower-top device respectively, wherein the tower-bottom MCU is configured to control, according to the present current value information of each tower-top device, a fake load configured to simulate a working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device;

wherein, the fake load includes a direct current switch power supply, configuration resistors R1, R2 and R3, and a power consumption resistor R; the direct current switch power supply includes an enable pin ENABLE pin, a standard feedback pin VSEN pin, an input pin VIN pin, a boot pin BOOT pin and a ground pin GND pin; the ENABLE pin is connected to the tower-bottom MCU; the tower-bottom MCU controls enabling and disabling of the direct current switch power supply via the ENABLE pin; the VIN pin is connected to the base station; the base station provides a LDO with a power supply via the VIN pin; a current flowing through the VIN pin is a current $I_{vin}$ of the input port of the fake load wherein the VIN pin is the input port of the fake load; R1 is connected between the VSEN pin and the BOOT pin; R2 is connected between the VSEN pin and the GND pin; R3 is connected between the VSEN pin and the tower-bottom MCU; R is connected between the BOOT pin and the GND pin; and the tower-bottom MCU provides the fake load with a control voltage $V_C$ via the R3 and the VSEN pin;

wherein the tower-bottom MCU comprises a second control unit configured to make the current $I_{vin}$ of the input port of the fake load equal to the present current value information of the tower-top device by adjusting the control voltage $V_C$ of the fake load configured to simulate the working current of the tower-top device according to a second corresponding relation between the control voltage $V_C$ of the fake load and the current $I_{vin}$ of the input port of the fake load.

The technical solution provided by the embodiments of the present invention provides the following beneficial effects:

The working current of each tower-top device is detected in real time to obtain the present current value information of each tower-top device, and, according to the present current value information of each tower-top device, the fake load configured to simulate the working current of the tower-top device is controlled to make the current of the input port of the fake load equal to the present current value information of the tower-top device, so that a base station without an AISG protocol communication function learns the present current value information of the tower-top device by detecting the current of the input port of the fake load which simulates the tower-top device, and determines whether the tower-top device is faulty according to the present current value information of the tower-top device. Thereby, a faulty tower-top device can be located in scenarios where one base station supplies power for multiple tower-top devices at the same time.

## BRIEF DESCRIPTION OF DRAWINGS

FIG. 1 is a flowchart of a method for locating a faulty tower-top device according to embodiment 1 of the present invention;

FIG. 2 is a schematic circuit diagram of a fake load and a tower-bottom MCU according to embodiment 1 of the present invention;

FIG. 3 is another schematic circuit diagram of a fake load and a tower-bottom MCU according to embodiment 1 of the present invention;

FIG. 4 is a schematic view of an apparatus for locating a faulty tower-top device according to embodiment 2 of the present invention; and

FIG. 5 is a schematic view of another apparatus for locating a faulty tower-top device according to embodiment 2 of the present invention.

## DESCRIPTION OF EMBODIMENTS

To make the objectives, technical solutions, and advantages of the present invention more clearly, the following further describes the embodiments of the present invention with reference to the accompanying drawings.

**Embodiment 1**

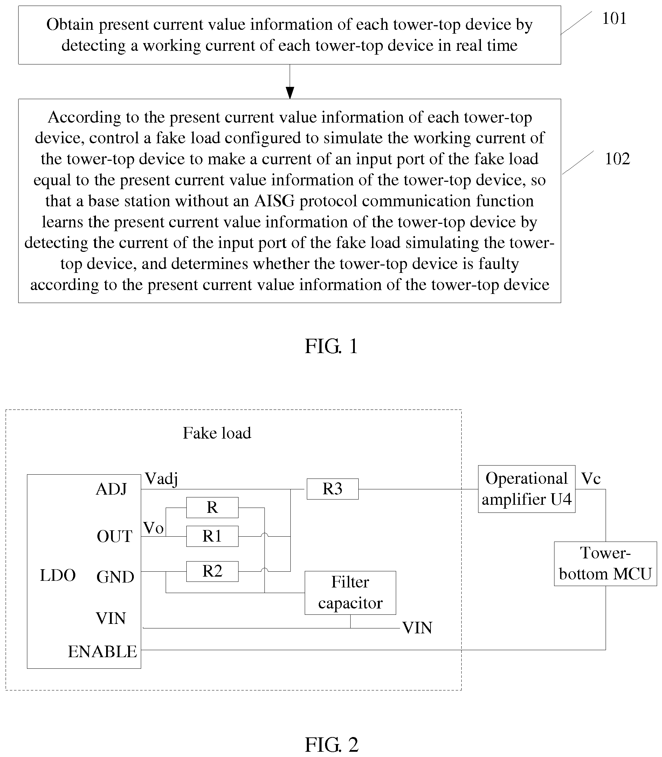

As illustrated in FIG. 1, the embodiment provides a method for locating a faulty tower-top device, including:

101: obtain present current value information of each tower-top device by detecting a working current of each tower-top device in real time; and

102: according to the present current value information of each tower-top device, control a fake load configured to simulate the working current of the tower-top device to make a current of an input port of the fake load equal to the present current value information of the tower-top device, so that a base station without an AISG protocol communication function learns the present current value information of the tower-top device by detecting the current of the input port of the fake load simulating the tower-top device, and determines whether the tower-top device is faulty according to the present current value information of the tower-top device.

Step 101 specifically includes:

each tower-top device is connected to one sampling circuit; the sampling circuit samples the working current of the tower-top device connected thereto in real time to obtain a present current value of the tower-top device, the current value obtained via sampling is converted into a corresponding voltage value and transmits to a tower-top MCU (Micro Control Unit, micro control unit); and the tower-top MCU determines the current value information corresponding to the voltage value according to a corresponding relation between the voltage and the current, and transmits the current value information to a tower-bottom MCU.

Further, each tower-top device may further correspond to a power supply module which supplies power to the corresponding tower-top device thereof.

The tower-top device may be a TMA (Tower Mounted Amplifier, tower mounted amplifier), an RCU (Remote Control Unit, remote control unit) and so on.

In step 102, according to the present current value information of each tower-top device, the fake load configured to simulate the working current of the tower-top device is controlled to make the current of the input port of the fake load equal to the present current value information of the tower-top device, which can be realized through at least the following two implementations:

Implementation 1:

The tower-top MCU is connected to the tower-bottom MCU. The tower-bottom MCU receives the present current value information of each tower-top device transmitted by the tower-top MCU, and makes the current $I_{vin}$ of the input port of the fake load equal to the present current value information of the tower-top device by adjusting a control voltage $V_C$ of the fake load configured to simulate the working current of the tower-top device according to a first corresponding

relation $\dfrac{R \times I_{vin} - V_{adj}}{R1} + \dfrac{V_C - V_{adj}}{R3} = \dfrac{V_{adj}}{R2}$ between the control voltage $V_C$ of the fake load and the current $I_{vin}$ of the

input port of the fake load, where R1, R2 and R3 are configuration resistors, R is a power consumption resistor, and $V_{adj}$ is a standard feedback voltage. R1, R2, R3, R and $V_{adj}$ are known.

A schematic circuit diagram of the fake load and the tower-bottom MCU is illustrated in FIG. 2. The tower-bottom MCU may be directly connected to the fake load, or may be connected to the fake load via an operational amplifier U4 (operational amplifier for short). That is, the operational amplifier U4 is optional. The operational amplifier U4 is configured to amplify a current outputted by the tower-top MCU. The fake load includes an LDO (Low Dropout Linear Regulator, low dropout linear regulator), the configuration resistors R1, R2 and R3, and the power consumption resistor R. The LDO includes an enable pin ENABLE pin, an standard feedback pin ADJ pin, an input pin VIN pin, an output pin OUT pin and a ground pin GND pin. The ENABLE pin is connected to the tower-bottom MCU. The tower-bottom MCU controls enabling and disabling of the LDO via the ENABLE pin. The VIN pin is connected to the base station. The base station provides the LDO with a power supply via the VIN pin. A current flowing through the VIN pin is the current $I_{vin}$ of the input port of the fake load. R1 is connected between the ADJ pin and the OUT pin. R2 is connected between the ADJ pin and the GND pin. R3 is connected between the ADJ pin and the tower-bottom MCU. R is connected between the OUT pin and the GND pin. A current flowing through R is equal to $I_{vin}$. A voltage outputted by the tower-bottom MCU is the control voltage Vc of the fake load. A voltage of the OUT pin is that $V_o = R \times I_{vin}$. Optionally, a filter capacitor may be connected between the VIN pin and the GND pin. The first corresponding relation can be derived from the circuit illustrated in FIG. 2.

Implementation 2:

The tower-top MCU is connected to the tower-bottom MCU. The tower-bottom MCU receives the present current value information of each tower-top device transmitted by the tower-top MCU, and makes the current $I_{vin}$ of the input port of the fake load equal to the present current value information of the tower-top device by adjusting a control voltage $V_C$ of the fake load configured to simulate the working current of the tower-top device according to a second corresponding

relation $\dfrac{\sqrt{R \times V_{vin} \times I_{vin} \times \eta} - V_{adj}}{R1} + \dfrac{V_C - V_{adj}}{R3} = \dfrac{V_{adj}}{R2}$ between the control voltage $V_C$ of the fake load and the current

$I_{vin}$ of the input port of the fake load, where R1, R2 and R3 are configuration resistors, R is a power consumption resistor, $V_{adj}$ is a standard feedback voltage, $V_{vin}$ is a voltage provided for the input port of the fake load by the base station, and $\eta$ is a conversion efficiency of the fake load. R1, R2, R3, R, $V_{adj}$, $V_{vin}$ and $\eta$ are known.

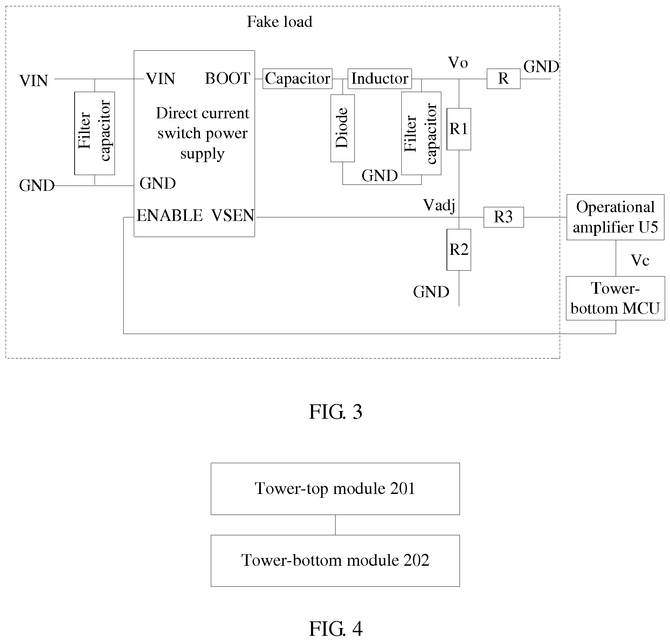

A schematic circuit diagram of the fake load and the tower-bottom MCU is illustrated in FIG. 3. The tower-bottom MCU may be directly connected to the fake load, or may be connected to the fake load via an operational amplifier U5 (operational amplifier for short). That is, the operational amplifier U5 is optional. The operational amplifier U5 is configured to amplify a current outputted by the tower-top MCU. The fake load includes a direct current switch power supply, the configuration resistors R1, R2 and R3, and the power consumption resistor R. The direct current switch power supply includes an enable pin ENA pin, a standard feedback pin VSEN pin, an input pin VIN pin, a boot pin BOOT pin and a ground pin GND pin. The ENA pin is connected to the tower-bottom MCU. The tower-bottom MCU controls enabling and disabling of the direct current switch power supply via the ENA pin. The VIN pin is connected to the base station. The base station provides the LDO with a power supply via the VIN pin. A current flowing through the VIN pin is the current $I_{vin}$ of the input port of the fake load. R1 is connected between the VSEN pin and the BOOT pin. R2 is connected between the VSEN pin and the GND pin. R3 is connected between the VSEN pin and the tower-bottom MCU. R is connected between the BOOT pin and the GND pin. A voltage outputted by the tower-bottom MCU is the control voltage Vc of the fake load. A voltage of the BOOT pin is $V_o = \sqrt{R \times V_{vin} \times I_{vin} \times \eta}$. Optionally, a capacitor and an inductor may be connected between the BOOT pin and R in series. One end of the inductor connected with the capacitor may be connected to a diode. One end of the inductor connected with R may be connected to a filter capacitor. The second corresponding relation can be derived from the circuit illustrated in FIG. 3.

In the embodiment, the working current of each tower-top device is detected in real time to obtain the present current value information of each tower-top device, and, according to the present current value information of each tower-top device, the fake load configured to simulate the working current of the tower-top device is controlled to make the current of the input port of the fake load equal to the present current value information of the tower-top device, so that a base station without an AISG protocol communication function learns the present current value information of the tower-top device by detecting the current of the input port of the fake load which simulates the tower-top device, and determines whether the tower-top device is faulty is faulty according to the present current value information of the tower-top device. Thereby, a faulty tower-top device can be located in scenarios where one base station supplies power for multiple tower-top devices at the same time.

**Embodiment 2**

As illustrated in FIG. 4, the embodiment provides an apparatus for locating a faulty tower-top device, including:

a tower-top module 201, configured to detect a working current of each tower-top device in real time, obtain present current value information of each tower-top device, and transmit the present current value information to a tower-bottom module 202; and

the tower-bottom module 202, including a tower-top MCU and a plurality of fake loads, configured to simulate a working current of each tower-top device respectively, where the tower-top MCU is configured to control, according to the present current value information of each tower-top device, a fake load configured to simulate a working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty is faulty according to the present current value information of the tower-top device.

The plurality of fake loads configured to simulate a working current of each tower-top device respectively, refer to a plurality of fake loads, where each fake load is configured to simulate the working current of one tower-top device.

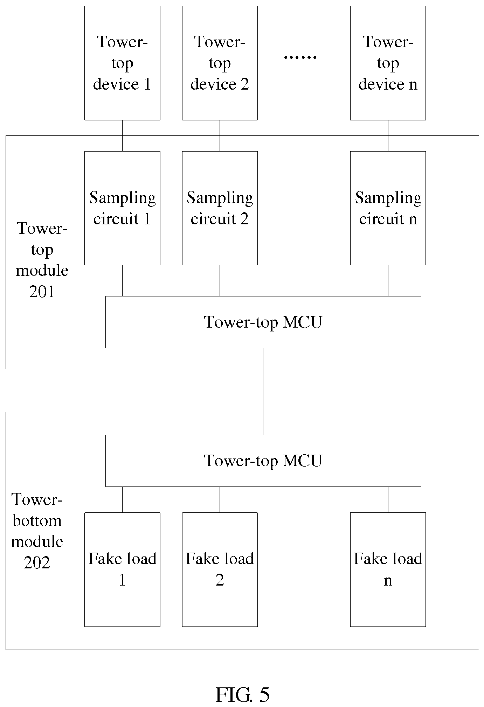

As illustrated in FIG. 5, the tower-top module 201 includes a plurality of sampling circuits connected to each tower-top device respectively and a tower-top MCU;

Each sampling circuit is configured to sample a working current of a tower-top device connected thereto in real time to obtain a present current value of the tower-top device, convert the current value obtained via sampling into a corresponding voltage value, and transmit to the tower-top MCU;

The tower-top MCU is configured to determine current value information corresponding to the voltage value according to a corresponding relation between the voltage and the current, and transmit the current value information to a tower-bottom MCU.

In one aspect, the tower-bottom MCU includes a first control unit, configured to make the current $I_{vin}$ of the input port of the fake load equal to the present current value information of the tower-top device by adjusting a control voltage $V_C$ of the fake load configured to simulate the working current of the tower-top device according to a first

corresponding relation $\dfrac{R \times I_{vin} - V_{adj}}{R1} + \dfrac{V_C - V_{adj}}{R3} = \dfrac{V_{adj}}{R2}$ between the control voltage $V_C$ of the fake load and the

current $I_{vin}$ of the input port of the fake load, where R1, R2 and R3 are configuration resistors, R is a power consumption resistor, and $V_{adj}$ is a standard feedback voltage.

When the tower-bottom MCU includes the first control unit, the fake load includes a low dropout learner regulator LDO, the configuration resistors R1, R2 and R3, and the power consumption resistor R. The LDO includes an enable pin ENABLE pin, an standard feedback pin ADJ pin, an input pin VIN pin, an output pin OUT pin and a ground pin GND pin. The ENABLE pin is connected to the tower-bottom MCU. The tower-bottom MCU controls enabling and disabling of the LDO via the ENABLE pin. The VIN pin is connected to the base station. The base station provides the LDO with a power supply via the VIN pin. A current flowing through the VIN pin is the current $I_{vin}$ of the input port of the fake load. R1 is connected between the ADJ pin and the OUT pin. R2 is connected between the ADJ pin and the GND pin. R3 is connected between the ADJ pin and the tower-bottom MCU. R is connected between the OUT pin and the GND pin. A current flowing through R is equal to $I_{vin}$. A voltage outputted by the tower-bottom MCU is the control voltage Vc of the fake load.

In another aspect, the tower-bottom MCU includes a second control unit configured to make the current $I_{vin}$ of the input port of the fake load equal to the present current value information of the tower-top device by adjusting a control voltage $V_C$ of the fake load configured to simulate the working current of the tower-top device according to a second

corresponding relation $\dfrac{\sqrt{R \times V_{vin} \times I_{vin} \times \eta} - V_{adj}}{R1} + \dfrac{V_C - V_{adj}}{R3} = \dfrac{V_{adj}}{R2}$ between the control voltage $V_C$ of the fake load and the current $I_{vin}$ of the input port of the fake load, where R1, R2 and R3 are configuration resistors, R is a power consumption resistor, $V_{adj}$ is a standard feedback voltage, $V_{vin}$ is a voltage provided for the input port of the fake load by the base station, and $\eta$ is a conversion efficiency of the fake load.

When the tower-bottom MCU includes the second control unit, the fake load includes a direct current switch power supply, the configuration resistors R1, R2 and R3, and the power consumption resistor R. The direct current switch power supply includes an enable pin ENA pin, a standard feedback pin VSEN pin, an input pin VIN pin, a boot pin BOOT pin and a ground pin GND pin. The ENA pin is connected to the tower-bottom MCU. The tower-bottom MCU controls enabling and disabling of the direct current switch power supply via the ENA pin. The VIN pin is connected to the base station. The base station provides the LDO with a power supply via the VIN pin. A current flowing through the VIN pin is the current $I_{vin}$ of the input port of the fake load. R1 is connected between the VSEN pin and the BOOT pin. R2 is connected between the VSEN pin and the GND pin. R3 is connected between the VSEN pin and the tower-bottom MCU. R is connected between the BOOT pin and the GND pin. A voltage outputted by the tower-bottom MCU is the control voltage Vc of the fake load.

The tower-top module 201 further includes a power supply module, where each tower-top device is connected to one power supply module, and the power supply module is configured to power the tower-top device connected thereto.

In the embodiment, the working current of each tower-top device is detected in real time to obtain the present current value information of each tower-top device, and, according to the present current value information of each tower-top device, the fake load configured to simulate the working current of the tower-top device is controlled to make the current of the input port of the fake load equal to the present current value information of the tower-top device, so that a base station without an AISG protocol communication function learns the present current value information of the tower-top device by detecting the current of the input port of the fake load which simulates the tower-top device, and determines whether the tower-top device is faulty is faulty according to the present current value information of the tower-top device. Thereby, a faulty tower-top device can be located in scenarios where one base station supplies power for multiple tower-top devices at the same time.

A person of ordinary skill in the art can understand that all or a part of the steps of the embodiments may be implemented by hardware, or may be implemented by a program instructing relevant hardware. The program may be stored in a computer readable storage medium, and the storage medium may be a read-only memory, a magnetic disk, or an optical disk.

The foregoing descriptions are merely preferred embodiments of the present invention, and are not intended to limit the present invention. Any modification, equivalent replacement and improvement implemented within the principle of the present invention shall fall within the protection scope of the present invention.

**Claims**

1. A method for locating a faulty tower-top device, comprising:

   detecting a working current of each tower-top device in real time to obtain present current value information of each tower-top device (101); and
   controlling, according to the present current value information of each tower-top device, a fake load configured to simulate the working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device (102);
   wherein, the fake load comprises a low dropout linear regulator, LDO, configuration resistors R1, R2 and R3, and a power consumption resistor R; the LDO comprises an enable pin ENABLE pin, a standard feedback pin ADJ pin, an input pin VIN pin, an output pin OUT pin and a ground pin GND pin; the ENABLE pin is connected to a tower-bottom micro control unit, MCU; the tower-bottom MCU controls enabling and disabling of the LDO via the ENABLE pin; the VIN pin is connected to a base station; the base station provides the LDO with a power supply via the VIN pin; a current flowing through the VIN pin is a current $I_{vin}$ of the input port of the fake load, wherein the VIN pin is the input port of the fake load; R1 is connected between the ADJ pin and the OUT pin; R2 is connected between the ADJ pin and the GND pin; R3 is connected between the ADJ pin and the tower-bottom MCU; R is connected between the OUT pin and the GND pin; a current flowing through R is equal to $I_{vin}$; and the tower-bottom MCU provides the fake load with a control voltage $V_C$ via the R3 and the ADJ pin;
   wherein the controlling, according to the present current value information of each tower-top device, a fake load configured to simulate the working current of the tower-top device to make a current of an input port of the fake load equal to the present current value information of the tower-top device comprises:
   making, by the tower-bottom MCU, the current $I_{vin}$ of the input port of the fake load equal to the present current value information of the tower-top device by adjusting the control voltage $V_C$ of the fake load configured to simulate the working current of the tower-top device according to a first corresponding relation between the control voltage $V_C$ of the fake load and the current $I_{vin}$ of the input port of the fake load.

2. The method according to claim 1, wherein the detecting the working current of each tower-top device in real time to obtain the present current value information of each tower-top device (101) comprises:
   sampling, by a sampling circuit in real time, a working current of a tower-top device connected to the sampling circuit to obtain a present current value of the tower-top device, converting the current value obtained via sampling into a corresponding voltage value and transmitting the voltage value to a tower-top micro control unit, MCU, determining, by the tower-top MCU according to a corresponding relation between the voltage and the current, current value information corresponding to the voltage value, and transmitting the current value information to the tower-bottom MCU.

3. A method for locating a faulty tower-top device, comprising:

   detecting a working current of each tower-top device in real time to obtain present current value information of each tower-top device (101); and

controlling, according to the present current value information of each tower-top device, a fake load configured to simulate the working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device (102);

wherein, the fake load comprises a direct current switch power supply, configuration resistors R1, R2 and R3, and a power consumption resistor R; the direct current switch power supply comprises an enable pin ENABLE pin, a standard feedback pin VSEN pin, an input pin VIN pin, a boot pin BOOT pin and a ground pin GND pin; the ENABLE pin is connected to a tower-bottom micro control unit, MCU; the tower-bottom MCU controls enabling and disabling of the direct current switch power supply via the ENABLE pin; the VIN pin is connected to a base station; the base station provides an LDO with a power supply via the VIN pin; a current flowing through the VIN pin is a current $I_{vin}$ of the input port of the fake load, wherein the VIN pin is the input port of the fake load; R1 is connected between the VSEN pin and the BOOT pin; R2 is connected between the VSEN pin and the GND pin; R3 is connected between the VSEN pin and the tower-bottom MCU; R is connected between the BOOT pin and the GND pin; and the tower-bottom MCU provides the fake load with a control voltage $V_C$ via the R3 and the VSEN pin;

wherein the controlling, according to the present current value information of each tower-top device, a fake load configured to simulate the working current of the tower-top device to make a current of an input port of the fake load equal to the present current value information of the tower-top device comprises:

making, by the tower-bottom MCU, the current $I_{vin}$ of the input port of the fake load equal to the present current value information of the tower-top device by adjusting the control voltage $V_C$ of the fake load configured to simulate the working current of the tower-top device according to a second corresponding relation between the control voltage $V_C$ of the fake load and the current $I_{vin}$ of the input port of the fake load.

4. The method according to claim 3, wherein the detecting the working current of each tower-top device in real time to obtain the present current value information of each tower-top device (101) comprises:

sampling, by a sampling circuit in real time, a working current of a tower-top device connected to the sampling circuit to obtain a present current value of the tower-top device, converting the current value obtained via sampling into a corresponding voltage value and transmitting the voltage value to a tower-top micro control unit MCU, determining, by the tower-top MCU according to a corresponding relation between the voltage and the current, current value information corresponding to the voltage value, and transmitting the current value information to the tower-bottom MCU.

5. The method according to claim 3, wherein the

second corresponding relation is $\dfrac{\sqrt{R \times V_{vin} \times I_{vin} \times \eta} - V_{adj}}{R1} + \dfrac{V_C - V_{adj}}{R3} = \dfrac{V_{adj}}{R2}$, wherein R1, R2 and R3 are configuration resistors, R is a power consumption resistor, $V_{adj}$ is a standard feedback voltage, $V_{vin}$ is a voltage provided for the input port of the fake load by the base station, and $\eta$ is a conversion efficiency of the fake load.

6. An apparatus for locating a faulty tower-top device, comprising:

a tower-top module(201), configured to detect a working current of each tower-top device in real time to obtain present current value information of each tower-top device, and transmit the present current value information to a tower-bottom module(202); and

the tower-bottom module(202), comprising a tower-bottom micro control unit, MCU, and a plurality of fake loads configured to simulate the working current of each tower-top device respectively, wherein the tower-bottom MCU is configured to control, according to the present current value information of each tower-top device, a fake load configured to simulate a working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device;

wherein, the fake load comprises a low dropout linear regulator LDO, configuration resistors R1, R2 and R3, and a power consumption resistor R; the LDO comprises an enable pin ENABLE pin, an standard feedback pin ADJ pin, an input pin VIN pin, an output pin OUT pin and a ground pin GND pin; the ENABLE pin is connected to the tower-bottom MCU; the tower-bottom MCU controls enabling and disabling of the LDO via the ENABLE pin; the VIN pin is connected to the base station; the base station provides the LDO with a power supply via the VIN pin; a current flowing through the VIN pin is a current $I_{vin}$ of the input port of the fake load, wherein the VIN pin is the input port of the fake load; R1 is connected between the ADJ pin and the OUT pin; R2 is connected between the ADJ pin and the GND pin; R3 is connected between the ADJ pin and the tower-bottom MCU; R is connected between the OUT pin and the GND pin; a current flowing through R is equal to $I_{vin}$; and the tower-bottom MCU provides the fake load with a control voltage $V_C$ via the R3 and the ADJ pin;

wherein the tower-bottom MCU comprises a first control unit configured to make the current $I_{vin}$ of the input port of the fake load equal to the present current value information of the tower-top device by adjusting the control voltage $V_C$ of the fake load configured to simulate the working current of the tower-top device according to a first corresponding relation between the control voltage $V_C$ of the fake load and the current $I_{vin}$ of the input port of the fake load.

7. The apparatus according to claim 6, wherein the tower-top module(201) comprises a plurality of sampling circuits connected to each tower top MCU respectively and a tower-top MCU;

each sampling circuit is configured to sample a working current of the tower-top device connected thereto in real time to obtain a present current value of the tower-top device, convert the current value obtained via sampling into a corresponding voltage value, and transmit to the tower-top MCU; and

the tower-top MCU is configured to determine current value information corresponding to the voltage value according to a corresponding relation between the voltage and the current, and transmit the current value information to the tower-bottom MCU.

8. An apparatus for locating a faulty tower-top device, comprising:

a tower-top module(201), configured to detect a working current of each tower-top device in real time to obtain present current value information of each tower-top device, and transmit the present current value information to a tower-bottom module(202); and

the tower-bottom module(202), comprising a tower-bottom micro control unit, MCU, and a plurality of fake loads configured to simulate the working current of each tower-top device respectively, wherein the tower-bottom MCU is configured to control, according to the present current value information of each tower-top device, a fake load configured to simulate a working current of the tower-top device to make a current of an input port of the fake load equal to the present current value information of the tower-top device, so that a base station without an antenna interface standards group AISG protocol communication function learns the present current value information of the tower-top device by detecting the current of the input port of the fake load simulating the tower-top device, and determines whether the tower-top device is faulty according to the present current value information of the tower-top device;

wherein, the fake load comprises a direct current switch power supply, configuration resistors R1, R2 and R3, and a power consumption resistor R; the direct current switch power supply comprises an enable pin ENABLE pin, a standard feedback pin VSEN pin, an input pin VIN pin, a boot pin BOOT pin and a ground pin GND pin; the ENABLE pin is connected to the tower-bottom MCU; the tower-bottom MCU controls enabling and disabling of the direct current switch power supply via the ENABLE pin; the VIN pin is connected to the base station; the base station provides a LDO with a power supply via the VIN pin; a current flowing through the VIN pin is a current $I_{vin}$ of the input port of the fake load, wherein the VIN pin is the input port of the fake load; R1 is connected between the VSEN pin and the BOOT pin; R2 is connected between the VSEN pin and the GND pin; R3 is connected between the VSEN pin and the tower-bottom MCU; R is connected between the BOOT pin and the GND pin; and the tower-bottom MCU provides the fake load with a control voltage $V_C$ via the R3 and the VSEN pin;

wherein the tower-bottom MCU comprises a second control unit configured to make the current $I_{vin}$ of the input port of the fake load equal to the present current value information of the tower-top device by adjusting the control voltage $V_C$ of the fake load configured to simulate the working current of the tower-top device according to a second corresponding relation between the control voltage $V_C$ of the fake load and the current $I_{vin}$ of the input port of the fake load.

9. The apparatus according to claim 8, wherein the tower-top module(201) comprises a plurality of sampling circuits connected to each tower top MCU respectively and a tower-top MCU;

each sampling circuit is configured to sample a working current of the tower-top device connected thereto in real time to obtain a present current value of the tower-top device, convert the current value obtained via sampling into a corresponding voltage value, and transmit to the tower-top MCU; and

the tower-top MCU is configured to determine current value information corresponding to the voltage value according to a corresponding relation between the voltage and the current, and transmit the current value information to the tower-bottom MCU.

10. The apparatus according to claim 8, wherein the second corresponding relation is

$$\frac{\sqrt{R \times V_{vin} \times I_{vin} \times \eta} - V_{adj}}{R1} + \frac{V_C - V_{adj}}{R3} = \frac{V_{adj}}{R2},$$ wherein R1, R2 and R3 are configuration resistors, R is a power consumption resistor, $V_{adj}$ is a standard feedback voltage, $V_{vin}$ is a voltage provided for the input port of the fake load, and $\eta$ is a conversion efficiency of the fake load.

**Patentansprüche**

1. Verfahren zum Lokalisieren einer fehlerhaften Turmoberteilvorrichtung, umfassend:

Detektieren eines Arbeitsstroms jeder Turmoberteilvorrichtung in Echtzeit, um aktuelle Stromwertinformationen jeder Turmoberteilvorrichtung (101) zu erhalten; und
Steuern einer unechten Last, die konfiguriert ist, um den Arbeitsstrom der Turmoberteilvorrichtung zu simulieren, entsprechend den aktuellen Stromwertinformationen jeder Turmoberteilvorrichtung, um zu bewirken, dass ein Strom an einem Eingangsanschluss der unechten Last gleich den aktuellen Stromwertinformationen der Turmoberteilvorrichtung ist, so dass eine Basisstation ohne eine Antennenschnittstellenkommunikationsfunktion des Gruppe AISG-Protokolls die aktuellen Stromwertinformationen der Turmoberteilvorrichtung erfährt, indem der Strom des Eingangsanschlusses der Scheinlast detektiert wird, die die Turmoberteilvorrichtung simuliert, und ermittelt wird, ob die Turmoberteilvorrichtung entsprechend den aktuellen Stromwertinformationen der Turmoberteilvorrichtung (102) fehlerhaft ist;
wobei die unechte Last einen Low-Dropout-Linearregler, LDO, Konfigurationswiderstände R1, R2 und R3, und einen Leistungsverbrauchswiderstand R umfasst; wobei der LDO einen Aktivierungspin ENABLE-Pin, einen Standardrückkopplungspin ADJ-Pin, einen Eingangspin VIN-Pin, einen Ausgangspin OUT-Pin und einen Erdungspin GND-Pin umfasst; wobei der ENABLE-Pin mit einer Turmboden-Mikrosteuerungseinheit, MCU, verbunden ist; wobei die Turmboden-MCU das Aktivieren und Deaktivieren des LDO über den ENABLE-Pin steuert; der VIN-Pin mit einer Basisstation verbunden ist; die Basisstation den LDO über den VIN-Pin mit einer Stromversorgung versieht; ein durch den VIN-Pin fließender Strom ein Strom $I_{vin}$ des Eingangsanschlusses der unechten Last ist, wobei der VIN-Pin der Eingangsanschluss der unechten Last ist; R1 zwischen dem ADJ-Pin und dem OUT-Pin angeschlossen ist; R2 zwischen dem ADJ-Pin und dem GND-Pin angeschlossen ist; R3 zwischen dem ADJ-Pin und der Turmboden-MCU angeschlossen ist; R zwischen dem OUT-Pin und dem GND-Pin angeschlossen ist; ein durch R fließender Strom gleich $I_{vin}$ ist; und die Turmboden-MCU die unechte Last über den R3 und den ADJ-Pin mit einer Steuerspannung $V_c$ versieht;
wobei das Steuern einer unechten Last, die konfiguriert ist, um den Arbeitsstrom der Turmoberteilvorrichtung zu simulieren, gemäß den aktuellen Stromwertinformationen jeder Turmoberteilvorrichtung, um zu bewirken, dass ein Strom eines Eingangsanschlusses der unechten Last gleich den aktuellen Stromwertinformationen der Turmoberteilvorrichtung ist, umfasst:
Gleichsetzen des Stroms $I_{vin}$ des Eingangsanschlusses der unechten Last mit den aktuellen Stromwertinformationen der Turmoberteilvorrichtung durch die Turmboden-MCU, indem die Steuerspannung $V_c$ der unechten Last, die konfiguriert ist, um den Arbeitsstrom der Turmoberteilvorrichtung zu simulieren, gemäß einer ersten entsprechenden Beziehung zwischen der Steuerspannung $V_c$ der unechten Last und dem Strom $I_{vin}$ des Eingangsanschlusses der unechten Last angepasst wird.

2. Verfahren nach Anspruch 1, wobei das Detektieren des Arbeitsstroms jeder Turmoberteilvorrichtung in Echtzeit, um die aktuellen Stromwertinformationen jeder Turmoberteilvorrichtung (101) zu erhalten, umfasst:
Abtasten eines Arbeitsstroms einer Turmoberteilvorrichtung, die mit dem Abtastschaltkreis verbunden ist, durch einen Abtastschaltkreis in Echtzeit, um einen aktuellen Stromwert der Turmoberteilvorrichtung zu erhalten, Konvertieren des mittels Abtasten erhaltenen Stromwerts in einen entsprechenden Spannungswert und Übertragen des Spannungswerts an eine Turmoberteil-Mikrosteuerungseinheit, MCU, Ermitteln von Stromwertinformationen, die dem Spannungswert entsprechen, durch die Turmoberteil-MCU gemäß einer entsprechenden Beziehung zwischen der Spannung und dem Strom, und Übertragen der Stromwertinformationen an die Turmboden-MCU.

**3.** Verfahren zum Lokalisieren einer fehlerhaften Turmoberteilvorrichtung, umfassend:

Detektieren eines Arbeitsstroms jeder Turmoberteilvorrichtung in Echtzeit, um aktuelle Stromwertinformationen jeder Turmoberteilvorrichtung (101) zu erhalten; und

Steuern einer unechten Last, die konfiguriert ist, um den Arbeitsstrom der Turmoberteilvorrichtung zu simulieren, entsprechend den aktuellen Stromwertinformationen jeder Turmoberteilvorrichtung, um zu bewirken, dass ein Strom an einem Eingangsanschluss der unechten Last gleich den aktuellen Stromwertinformationen der Turmoberteilvorrichtung ist, so dass eine Basisstation ohne eine Antennenschnittstellenkommunikationsfunktion des Gruppe AISG-Protokolls die aktuellen Stromwertinformationen der Turmoberteilvorrichtung erfährt, indem der Strom des Eingangsanschlusses der Scheinlast detektiert wird, die die Turmoberteilvorrichtung simuliert, und ermittelt wird, ob die Turmoberteilvorrichtung entsprechend den aktuellen Stromwertinformationen der Turmoberteilvorrichtung (102) fehlerhaft ist;

wobei die unechte Last ein Gleichstrom-Schaltnetzteil, Konfigurationswiderstände R1, R2 und R3 und einen Leistungsverbrauchswiderstand R umfasst; das Gleichstrom-Schaltnetzteil einen Aktivierungspin ENABLE-Pin, einen Standardrückkopplungspin VSEN-Pin, einen Eingangspin VIN-Pin, einen Startpin BOOT-Pin und einen Erdungspin GND-Pin umfasst; der ENABLE-Pin mit einer Turmboden-Mikrosteuerungseinheit, MCU, verbunden ist; die Turmboden-MCU Aktivieren und Deaktivieren des Gleichstrom-Schaltnetzteils über den ENABLE-Pin steuert; der VIN-Pin mit einer Basisstation verbunden ist; die Basisstation einen LDO über den VIN-Pin mit einer Stromzufuhr versorgt; ein durch den VIN-Pin fließender Strom ein Strom $I_{vin}$ des Eingangsanschlusses der unechten Last ist, wobei der VIN-Pin der Eingangsanschluss der unechten Last ist; R1 zwischen dem VSEN-Pin und dem BOOT-Pin angeschlossen ist; R2 zwischen dem VSEN-Pin und dem GND-Pin angeschlossen ist; R3 zwischen dem VSEN-Pin und der Turmboden-MCU angeschlossen ist; R zwischen dem BOOT-Pin und dem GND-Pin angeschlossen ist; und

die Turmboden-MCU die unechte Last über den R3 und den VSEN-Pin mit einer Steuerspannung $V_c$ versieht; wobei das Steuern einer unechten Last, die konfiguriert ist, um den Arbeitsstrom der Turmoberteilvorrichtung zu simulieren, gemäß den aktuellen Stromwertinformationen jeder Turmoberteilvorrichtung, um zu bewirken, dass ein Strom eines Eingangsanschlusses der unechten Last gleich den aktuellen Stromwertinformationen der Turmoberteilvorrichtung ist, umfasst:

Gleichsetzen des Stroms $I_{vin}$ des Eingangsanschlusses der unechten Last mit den aktuellen Stromwertinformationen der Turmoberteilvorrichtung durch die Turmboden-MCU, indem die Steuerspannung $V_c$ der unechten Last angepasst wird, die konfiguriert ist, um den Arbeitsstrom der Turmoberteilvorrichtung gemäß einer zweiten entsprechenden Beziehung zwischen der Steuerspannung $V_c$ der unechten Last und dem aktuellen $I_{vin}$ des Eingangsanschlusses der unechten Last zu simulieren.

**4.** Verfahren nach Anspruch 3, wobei das Detektieren des Arbeitsstroms jeder Turmoberteilvorrichtung in Echtzeit, um die aktuellen Stromwertinformationen jeder Turmoberteilvorrichtung (101) zu erhalten, umfasst:

Abtasten eines Arbeitsstroms einer Turmoberteilvorrichtung, die mit dem Abtastschaltkreis verbunden ist, durch einen Abtastschaltkreis in Echtzeit, um einen aktuellen Stromwert der Turmoberteilvorrichtung zu erhalten, Konvertieren des mittels Abtasten erhaltenen Stromwerts in einen entsprechenden Spannungswert, und Übertragen des Spannungswerts an eine Turmoberteil-Mikrosteuereinheit MCU, Ermitteln von Stromwertinformationen, die dem Spannungswert entsprechen, durch die Turmoberteil-MCU gemäß einer entsprechenden Beziehung zwischen der Spannung und dem Strom, und Übertragen der Stromwertinformationen an die Turmboden-MCU.

**5.** Verfahren nach Anspruch 3, wobei die zweite entsprechende Beziehung

$$\frac{\sqrt{R \times V_{vin} \times I_{vin} \times \eta} - V_{adj}}{R1} + \frac{V_C - V_{adj}}{R3} = \frac{V_{adj}}{R2}$$ ist, wobei R1, R2 und R3 Konfigurationswiderstände sind, R ein Leistungsverbrauchswiderstand ist, $V_{adj}$ eine Standardrückkopplungsspannung ist, $V_{vin}$ eine Spannung ist, die dem Eingangsanschluss der unechten Last durch die Basisstation bereitgestellt wird, und $\eta$ eine Konvertierungseffizienz der unechten Last ist.

**6.** Vorrichtung zum Lokalisieren einer fehlerhaften Turmoberteilvorrichtung, umfassend:

ein Turmoberteilmodul (201), das konfiguriert ist, um einen Arbeitsstrom jeder Turmoberteilvorrichtung in Echtzeit zu detektieren, um aktuelle Stromwertinformationen von jeder Turmoberteilvorrichtung zu erhalten, und die aktuellen Stromwertinformationen an ein Turmbodenmodul (202) zu übertragen; und

das Turmbodenmodul (202), welches eine Turmboden-Mikrosteuerungseinheit, MCU, und eine Vielzahl von unechten Lasten umfasst, die konfiguriert sind, um den Arbeitsstrom jeder jeweiligen Turmoberteilvorrichtung zu simulieren, wobei die Turmboden-MCU konfiguriert ist, um eine unechte Last, die konfiguriert ist, um einen Arbeitsstrom der Turmoberteilvorrichtung zu simulieren, entsprechend den aktuellen Stromwertinformationen jeder Turmoberteilvorrichtung zu steuern, um zu bewirken, dass ein Strom an einem Eingangsanschluss der unechten Last gleich den aktuellen Stromwertinformationen der Turmoberteilvorrichtung ist, so dass eine Basisstation ohne eine Antennenschnittstellenkommunikationsfunktion des Gruppe AISG-Protokolls die aktuellen Stromwertinformationen der Turmoberteilvorrichtung erfährt, indem der Strom des Eingangsanschlusses der Scheinlast detektiert wird, die die Turmoberteilvorrichtung simuliert, und ermittelt wird, ob die Turmoberteilvorrichtung entsprechend den aktuellen Stromwertinformationen der Turmoberteilvorrichtung fehlerhaft ist;

wobei die unechte Last einen Low-Dropout-Linearregler, LDO, Konfigurationswiderstände R1, R2 und R3 und einen Leistungsverbrauchswiderstand R umfasst; der LDO einen Aktivierungspin ENABLE-Pin, einen Standardrückkopplungspin ADJ-Pin, einen Eingangspin VIN-Pin, einen Ausgangspin OUT-Pin und einen Erdungspin GND-Pin umfasst; der ENABLE-Pin mit der Turmboden-Mikrosteuerungseinheit, MCU, verbunden ist; die Turmboden-MCU Aktivieren und Deaktivieren des LDO über den ENABLE-Pin steuert; der VIN-Pin mit der Basisstation verbunden ist; die Basisstation den LDO über den VIN-Pin mit einer Stromzufuhr versorgt; ein durch den VIN-Pin fließender Strom ein Strom $I_{vin}$ des Eingangsanschlusses der unechten Last ist, wobei der VIN-Pin der Eingangsanschluss der unechten Last ist; R1 zwischen dem ADJ-Pin und dem OUT-Pin angeschlossen ist; R2 zwischen dem ADJ-Pin und dem GND-Pin angeschlossen ist; R3 zwischen dem ADJ-Pin und der Turmboden-MCU angeschlossen ist; R zwischen dem OUT-Pin und dem GND-Pin angeschlossen ist; ein durch R fließender Strom gleich $I_{vin}$ ist; und die Turmboden-MCU die unechte Last über den R3 und den ADJ-Pin mit einer Steuerspannung $V_c$ versieht;

wobei die Turmboden-MCU eine erste Steuereinheit umfasst, die zum Gleichsetzen des Stroms $I_{vin}$ des Eingangsanschlusses der unechten Last mit den aktuellen Stromwertinformationen der Turmoberteilvorrichtung konfiguriert ist, indem die Steuerspannung $V_c$ der unechten Last, die konfiguriert ist, um den Arbeitsstrom der Turmoberteilvorrichtung zu simulieren, gemäß einer ersten entsprechenden Beziehung zwischen der Steuerspannung $V_c$ der unechten Last und dem Strom $I_{vin}$ des Eingangsanschlusses der unechten Last angepasst wird.

7. Vorrichtung nach Anspruch 6, wobei das Turmoberteilmodul (201) eine Vielzahl von Abtastschaltkreisen umfasst, die jeweils mit jeder Turmoberteil-MCU und einer Turmoberteil-MCU verbunden sind;

jeder Abtastschaltkreis konfiguriert ist, um einen Arbeitsstrom der daran angeschlossenen Turmoberteilvorrichtung in Echtzeit abzutasten, um einen aktuellen Stromwert der Turmoberteilvorrichtung zu erhalten, den über Abtasten erhaltenen Stromwert in einen entsprechenden Spannungswert zu konvertieren und an die Turmoberteil-MCU zu übertragen; und

die Turmoberteil-MCU konfiguriert ist, um Stromwertinformationen, die dem Spannungswert entsprechen, gemäß einer entsprechenden Beziehung zwischen der Spannung und dem Strom zu ermitteln und die Stromwertinformationen an die Turmboden-MCU zu übertragen.

8. Vorrichtung zum Lokalisieren einer fehlerhaften Turmoberteilvorrichtung, umfassend:

ein Turmoberteilmodul (201), das konfiguriert ist, um einen Arbeitsstrom jeder Turmoberteilvorrichtung in Echtzeit zu detektieren, um aktuelle Stromwertinformationen von jeder Turmoberteilvorrichtung zu erhalten, und die aktuellen Stromwertinformationen an ein Turmbodenmodul (202) zu übertragen; und

das Turmbodenmodul (202), welches eine Turmboden-Mikrosteuerungseinheit, MCU, und eine Vielzahl von unechten Lasten umfasst, die konfiguriert sind, um den Arbeitsstrom jeder jeweiligen Turmoberteilvorrichtung zu simulieren, wobei die Turmboden-MCU konfiguriert ist, um eine unechte Last, die konfiguriert ist, um einen Arbeitsstrom der Turmoberteilvorrichtung zu simulieren, entsprechend den aktuellen Stromwertinformationen jeder Turmoberteilvorrichtung zu steuern, um zu bewirken, dass ein Strom an einem Eingangsanschluss der unechten Last gleich den aktuellen Stromwertinformationen der Turmoberteilvorrichtung ist, so dass eine Basisstation ohne eine Antennenschnittstellenkommunikationsfunktion des Gruppe AISG-Protokolls die aktuellen Stromwertinformationen der Turmoberteilvorrichtung erfährt, indem der Strom des Eingangsanschlusses der Scheinlast detektiert wird, die die Turmoberteilvorrichtung simuliert, und ermittelt wird, ob die Turmoberteilvorrichtung entsprechend den aktuellen Stromwertinformationen der Turmoberteilvorrichtung fehlerhaft ist;

wobei die unechte Last ein Gleichstrom-Schaltnetzteil, Konfigurationswiderstände R1, R2 und R3 und einen Leistungsverbrauchswiderstand R umfasst; das Gleichstrom-Schaltnetzteil einen Aktivierungspin ENABLE-Pin, einen Standardrückkopplungspin VSEN-Pin, einen Eingangspin VIN-Pin, einen Startpin BOOT-Pin und einen Erdungspin GND-Pin umfasst; der ENABLE-Pin mit der Turmboden-MCU verbunden ist; die Turmboden-MCU Aktivieren und Deaktivieren des Gleichstrom-Schaltnetzteils über den ENABLE-Pin steuert; der VIN-Pin mit einer Basisstation verbunden ist; die Basisstation einen LDO über den VIN-Pin mit einer Stromzufuhr versorgt; ein durch den VIN-Pin fließender Strom ein Strom $I_{vin}$ des Eingangsanschlusses der unechten Last ist, wobei der VIN-Pin der Eingangsanschluss der unechten Last ist; R1 zwischen dem VSEN-Pin und dem BOOT-Pin angeschlossen ist; R2 zwischen dem VSEN-Pin und dem GND-Pin angeschlossen ist; R3 zwischen dem VSEN-Pin und der Turmboden-MCU angeschlossen ist; R zwischen dem BOOT-Pin und dem GND-Pin angeschlossen ist; und die Turmboden-MCU die unechte Last über den R3 und den VSEN-Pin mit einer Steuerspannung $V_c$ versieht;

wobei die Turmboden-MCU eine zweite Steuereinheit umfasst, die zum Gleichsetzen des Stroms $I_{vin}$ des Eingangsanschlusses der unechten Last mit den aktuellen Stromwertinformationen der Turmoberteilvorrichtung konfiguriert ist, indem die Steuerspannung $V_c$ der unechten Last angepasst wird, die konfiguriert ist, um den Arbeitsstrom der Turmoberteilvorrichtung gemäß einer zweiten entsprechenden Beziehung zwischen der Steuerspannung $V_c$ der unechten Last und dem Strom $I_{vin}$ des Eingangsanschlusses der unechten Last zu simulieren.

9. Vorrichtung nach Anspruch 8, wobei das Turmoberteilmodul (201) eine Vielzahl von Abtastschaltkreisen umfasst, die jeweils mit jeder Turmoberteil-MCU und einer Turmoberteil-MCU verbunden sind;

jeder Abtastschaltkreis konfiguriert ist, um einen Arbeitsstrom der daran angeschlossenen Turmoberteilvorrichtung in Echtzeit abzutasten, um einen aktuellen Stromwert der Turmoberteilvorrichtung zu erhalten, den über Abtasten erhaltenen Stromwert in einen entsprechenden Spannungswert zu konvertieren und an die Turmoberteil-MCU zu übertragen; und

die Turmoberteil-MCU konfiguriert ist, um Stromwertinformationen, die dem Spannungswert entsprechen, gemäß einer entsprechenden Beziehung zwischen der Spannung und dem Strom zu ermitteln und die Stromwertinformationen an die Turmboden-MCU zu übertragen.

10. Vorrichtung nach Anspruch 8, wobei die zweite entsprechende Beziehung

$$\frac{\sqrt{R \times V_{vin} \times I_{vin} \times \eta} - V_{adj}}{R1} + \frac{V_C - V_{adj}}{R3} = \frac{V_{adj}}{R2}$$ ist, wobei R1, R2 und R3 Konfigurationswiderstände sind, R ein Leistungsverbrauchswiderstand ist, $V_{adj}$ eine Standardrückkopplungsspannung ist, $V_{vin}$ eine Spannung ist, die dem Eingangsanschluss der unechten Last durch die Basisstation bereitgestellt wird, und $\eta$ eine Konvertierungseffizienz der unechten Last ist.

## Revendications

1. Procédé pour localiser un dispositif de sommet de tour défectueux, comprenant les étapes consistant à :

détecter un courant de fonctionnement de chaque dispositif de sommet de tour en temps réel pour obtenir des informations de valeur de courant actuelle de chaque dispositif de sommet de tour (101) ; et

commander, en fonction des informations de valeur de courant actuelle de chaque dispositif de sommet de tour, une fausse charge conçue pour simuler le courant de fonctionnement du dispositif de sommet de tour pour rendre un courant d'un port d'entrée de la fausse charge égal aux informations de valeur de courant actuelle du dispositif de sommet de tour, afin qu'une station de base dépourvue de fonction de communication en protocole AISG (groupe de normes d'interface d'antenne) acquière les informations de valeur de courant actuelle du dispositif de sommet de tour en détectant le courant du port d'entrée de la fausse charge qui simule le dispositif de sommet de tour, et détermine si le dispositif de sommet de tour est ou non défectueux d'après les informations de valeur de courant actuelle du dispositif de sommet de tour (102) ;

dans lequel la fausse charge comporte un régulateur linéaire à faibles pertes, LDO, des résistances de configuration R1, R2 et R3, et une résistance de consommation d'énergie R; le LDO comporte une broche d'activation (broche ENABLE), une broche de rétroaction standard (broche ADJ), une broche d'entrée (broche VIN), une broche de sortie (broche OUT) et une broche de masse (broche GND); la broche ENABLE est reliée à une micro-unité de commande, MCU, de base de tour; la MCU de base de tour commande l'activation et la désactivation du LDO par l'intermédiaire de la broche ENABLE ; la broche VIN est reliée à une station de base ; la station de base fournit une alimentation électrique au LDO par l'intermédiaire de la broche VIN ; un courant circulant dans la broche VIN est un courant $I_{vin}$ du port d'entrée de la fausse charge, la broche VIN étant le port d'entrée de la fausse charge ; R1 est branchée entre la broche ADJ et la broche OUT ; R2 est branchée entre la broche ADJ et la broche GND ; R3 est branchée entre la broche ADJ et la MCU de base de tour; R est branchée entre la broche OUT et la broche GND ; un courant circulant dans R est égal à $I_{vin}$ ; et la MCU de base de tour fournit une tension de commande $V_c$ à la fausse charge par l'intermédiaire de R3 et de la broche ADJ ;

dans lequel la commande, en fonction des informations de valeur de courant actuelle de chaque dispositif de sommet de tour, d'une fausse charge conçue pour simuler le courant de fonctionnement du dispositif de sommet de tour pour rendre un courant d'un port d'entrée de la fausse charge égal aux informations de valeur de courant actuelle du dispositif de sommet de tour, comprend l'étape consistant à :

rendre, par la MCU de base de tour, le courant $I_{vin}$ du port d'entrée de la fausse charge égal aux informations de valeur de courant actuelle du dispositif de sommet de tour en réglant la tension de commande $V_c$ de la fausse charge conçue pour simuler le courant de fonctionnement du dispositif de sommet de tour en fonction d'une première relation correspondante entre la tension de commande $V_c$ de la fausse charge et le courant $I_{vin}$ du port d'entrée de la fausse charge.

2. Procédé selon la revendication 1, dans lequel l'étape consistant à détecter le courant de fonctionnement de chaque dispositif de sommet de tour en temps réel pour obtenir les informations de valeur de courant actuelle de chaque dispositif de sommet de tour (101) comprend les étapes consistant à :

échantillonner, par un circuit d'échantillonnage en temps réel, un courant de fonctionnement d'un dispositif de sommet de tour relié au circuit d'échantillonnage pour obtenir une valeur de courant actuelle du dispositif de sommet de tour, convertir la valeur de courant obtenue par l'échantillonnage en une valeur de tension correspondante et envoyer la valeur de tension à une micro-unité de commande, MCU, de sommet de tour, déterminer, par la MCU de sommet de tour selon une relation correspondante entre la tension et le courant, des informations de valeur de courant correspondant à la valeur de tension, et envoyer les informations de valeur de courant à la MCU de base de tour.

3. Procédé pour localiser un dispositif de sommet de tour défectueux, comprenant les étapes consistant à :

détecter un courant de fonctionnement de chaque dispositif de sommet de tour en temps réel pour obtenir des informations de valeur de courant actuelle de chaque dispositif de sommet de tour (101) ; et

commander, en fonction des informations de valeur de courant actuelle de chaque dispositif de sommet de tour, une fausse charge conçue pour simuler le courant de fonctionnement du dispositif de sommet de tour pour rendre un courant d'un port d'entrée de la fausse charge égal aux informations de valeur de courant actuelle du dispositif de sommet de tour, afin qu'une station de base dépourvue de fonction de communication en protocole AISG (groupe de normes d'interface d'antenne) acquière les informations de valeur de courant actuelle du dispositif de sommet de tour en détectant le courant du port d'entrée de la fausse charge qui simule le dispositif de sommet de tour, et détermine si le dispositif de sommet de tour est ou non défectueux d'après les informations de valeur de courant actuelle du dispositif de sommet de tour (102) ;

dans lequel la fausse charge comporte une alimentation électrique à découpage à courant continu, des résistances de configuration R1, R2 et R3, et une résistance de consommation d'énergie R; l'alimentation électrique à découpage à courant continu comporte une broche d'activation (broche ENABLE), une broche de rétroaction standard (broche VSEN), une broche d'entrée (broche VIN), une broche d'amorçage (broche BOOT) et une broche de masse (broche GND) ; la broche ENABLE est reliée à une micro-unité de commande, MCU, de base de tour; la MCU de base de tour commande l'activation et la désactivation de l'alimentation électrique à découpage à courant continu par l'intermédiaire de la broche ENABLE ; la broche VIN est reliée à une station de base ; la station de base fournit une alimentation électrique à un LDO par l'intermédiaire de la broche VIN ; un courant circulant dans la broche VIN est un courant $I_{vin}$ du port d'entrée de la fausse charge, la broche VIN étant le port d'entrée de la fausse charge ; R1 est branchée entre la broche VSEN et la broche BOOT ; R2 est branchée entre la broche VSEN et la broche GND ; R3 est branchée entre la broche VSEN et la MCU de base de tour; R est branchée entre la broche BOOT et la broche GND ; et la MCU de base de tour fournit une tension de commande $V_c$ à la fausse charge par l'intermédiaire de R3 et de la broche VSEN ;

dans lequel la commande, en fonction des informations de valeur de courant actuelle de chaque dispositif de sommet de tour, d'une fausse charge conçue pour simuler le courant de fonctionnement du dispositif de sommet de tour pour rendre un courant d'un port d'entrée de la fausse charge égal aux informations de valeur de courant actuelle du dispositif de sommet de tour, comprend l'étape consistant à :

rendre, par la MCU de base de tour, le courant $I_{vin}$ du port d'entrée de la fausse charge égal aux informations de valeur de courant actuelle du dispositif de sommet de tour en réglant la tension de commande $V_c$ de la fausse charge conçue pour simuler le courant de fonctionnement du dispositif de sommet de tour en fonction d'une deuxième relation correspondante entre la tension de commande $V_c$ de la fausse charge et le courant $I_{vin}$ du port d'entrée de la fausse charge.

**4.** Procédé selon la revendication 3, dans lequel l'étape consistant à détecter le courant de fonctionnement de chaque dispositif de sommet de tour en temps réel pour obtenir les informations de valeur de courant actuelle de chaque dispositif de sommet de tour (101) comprend les étapes consistant à :

échantillonner, par un circuit d'échantillonnage en temps réel, un courant de fonctionnement d'un dispositif de sommet de tour relié au circuit d'échantillonnage pour obtenir une valeur de courant actuelle du dispositif de sommet de tour, convertir la valeur de courant obtenue par l'échantillonnage en une valeur de tension correspondante et envoyer la valeur de tension à une micro-unité de commande, MCU, de sommet de tour, déterminer, par la MCU de sommet de tour selon une relation correspondante entre la tension et le courant, des informations de valeur de courant correspondant à la valeur de tension, et envoyer les informations de valeur de courant à la MCU de base de tour.

**5.** Procédé selon la revendication 3, dans lequel la deuxième relation correspondante est

$$\frac{\sqrt{R \times V_{vin} \times I_{vin} \times \eta} - V_{adj}}{R1} + \frac{V_C - V_{adj}}{R3} = \frac{V_{adj}}{R2},$$ où R1, R2 et R3 sont des résistances de configuration, R est une résistance de consommation d'énergie, $V_{adj}$ est une tension de rétroaction standard, $V_{vin}$ est une tension fournie pour le port d'entrée de la fausse charge par la station de base, et η est un rendement de conversion de la fausse charge.

**6.** Appareil pour localiser un dispositif de sommet de tour défectueux, comprenant :

un module de sommet de tour (201), conçu pour détecter un courant de fonctionnement de chaque dispositif de sommet de tour en temps réel pour obtenir des informations de valeur de courant actuelle de chaque dispositif de sommet de tour, et envoyer les informations de valeur de courant actuelle à un module de base de tour (202) ; et

le module de base de tour (202), comprenant une micro-unité de commande, MCU, de base de tour, et une pluralité de fausses charges conçues pour simuler le courant de fonctionnement de chaque dispositif de sommet de tour, respectivement, dans lequel la MCU de base de tour est conçue pour commander, en fonction des informations de valeur de courant actuelle de chaque dispositif de sommet de tour, une fausse charge conçue pour simuler un courant de fonctionnement du dispositif de sommet de tour pour rendre un courant d'un port d'entrée de la fausse charge égal aux informations de valeur de courant actuelle du dispositif de sommet de tour, afin qu'une station de base dépourvue de fonction de communication en protocole AISG (groupe de normes d'interface d'antenne) acquière les informations de valeur de courant actuelle du dispositif de sommet de tour en détectant le courant du port d'entrée de la fausse charge qui simule le dispositif de sommet de tour, et détermine si le dispositif de sommet de tour est ou non défectueux d'après les informations de valeur de courant actuelle du dispositif de sommet de tour ;

dans lequel la fausse charge comporte un régulateur linéaire à faibles pertes, LDO, des résistances de configuration R1, R2 et R3, et une résistance de consommation d'énergie R; le LDO comporte une broche d'activation (broche ENABLE), une broche de rétroaction standard (broche ADJ), une broche d'entrée (broche VIN), une broche de sortie (broche OUT) et une broche de masse (broche GND) ; la broche ENABLE est reliée à la MCU de base de tour; la MCU de base de tour commande l'activation et la désactivation du LDO par l'intermédiaire de la broche ENABLE ; la broche VIN est reliée à la station de base ; la station de base fournit une alimentation électrique au LDO par l'intermédiaire de la broche VIN ; un courant circulant dans la broche VIN est un courant $I_{vin}$ du port d'entrée de la fausse charge, la broche VIN étant le port d'entrée de la fausse charge ; R1 est branchée entre la broche ADJ et la broche OUT; R2 est branchée entre la broche ADJ et la broche GND ; R3 est branchée entre la broche ADJ et la MCU de base de tour ; R est branchée entre la broche OUT et la broche GND ; un courant circulant dans R est égal à $I_{vin}$; et la MCU de base de tour fournit une tension de commande $V_c$ à la fausse charge par l'intermédiaire de R3 et de la broche ADJ ;

dans lequel la MCU de base de tour comprend une première unité de commande conçue pour rendre le courant $I_{vin}$ du port d'entrée de la fausse charge égal aux informations de valeur de courant actuelle du dispositif de sommet de tour en réglant la tension de commande $V_c$ de la fausse charge conçue pour simuler le courant de fonctionnement du dispositif de sommet de tour en fonction d'une première relation correspondante entre la tension de commande $V_c$ de la fausse charge et le courant $I_{vin}$ du port d'entrée de la fausse charge.

**7.** Appareil selon la revendication 6, dans lequel le module de sommet de tour (201) comprend une pluralité de circuits d'échantillonnage reliés à chaque MCU de sommet de tour, respectivement, et une MCU de sommet de tour ;

chaque circuit d'échantillonnage est conçu pour échantillonner en temps réel un courant de fonctionnement du dispositif de sommet de tour qui lui est relié pour obtenir une valeur de courant actuelle du dispositif de sommet de tour, convertir la valeur de courant obtenue par l'échantillonnage en une valeur de tension correspondante et l'envoyer à la MCU de sommet de tour; et

la MCU de sommet de tour est conçue pour déterminer des informations de valeur de courant correspondant à la valeur de tension selon une relation correspondante entre la tension et le courant, et envoyer les informations de valeur de courant à la MCU de base de tour.

8. Appareil pour localiser un dispositif de sommet de tour défectueux, comprenant :

un module de sommet de tour (201), conçu pour détecter un courant de fonctionnement de chaque dispositif de sommet de tour en temps réel pour obtenir des informations de valeur de courant actuelle de chaque dispositif de sommet de tour, et envoyer les informations de valeur de courant actuelle à un module de base de tour (202) ; et

le module de base de tour (202), comprenant une micro-unité de commande, MCU, de base de tour, et une pluralité de fausses charges conçues pour simuler le courant de fonctionnement de chaque dispositif de sommet de tour, respectivement, dans lequel la MCU de base de tour est conçue pour commander, en fonction des informations de valeur de courant actuelle de chaque dispositif de sommet de tour, une fausse charge conçue pour simuler un courant de fonctionnement du dispositif de sommet de tour pour rendre un courant d'un port d'entrée de la fausse charge égal aux informations de valeur de courant actuelle du dispositif de sommet de tour, afin qu'une station de base dépourvue de fonction de communication en protocole AISG (groupe de normes d'interface d'antenne) acquière les informations de valeur de courant actuelle du dispositif de sommet de tour en détectant le courant du port d'entrée de la fausse charge qui simule le dispositif de sommet de tour, et détermine si le dispositif de sommet de tour est ou non défectueux d'après les informations de valeur de courant actuelle du dispositif de sommet de tour ;

dans lequel la fausse charge comporte une alimentation électrique à découpage à courant continu, des résistances de configuration R1, R2 et R3, et une résistance de consommation d'énergie R; l'alimentation électrique à découpage à courant continu comporte une broche d'activation (broche ENABLE), une broche de rétroaction standard (broche VSEN), une broche d'entrée (broche VIN), une broche d'amorçage (broche BOOT) et une broche de masse (broche GND) ; la broche ENABLE est reliée à la MCU de base de tour; la MCU de base de tour commande l'activation et la désactivation de l'alimentation électrique à découpage à courant continu par l'intermédiaire de la broche ENABLE ; la broche VIN est reliée à la station de base ;

la station de base fournit une alimentation électrique à un LDO par l'intermédiaire de la broche VIN ; un courant circulant dans la broche VIN est un courant $I_{vin}$ du port d'entrée de la fausse charge, la broche VIN étant le port d'entrée de la fausse charge ;

R1 est branchée entre la broche VSEN et la broche BOOT ; R2 est branchée entre la broche VSEN et la broche GND ; R3 est branchée entre la broche VSEN et la MCU de base de tour ; R est branchée entre la broche BOOT et la broche GND ; et la MCU de base de tour fournit une tension de commande $V_c$ à la fausse charge par l'intermédiaire de R3 et de la broche VSEN ;

dans lequel la MCU de base de tour comprend une deuxième unité de commande conçue pour rendre le courant $I_{vin}$ du port d'entrée de la fausse charge égal aux informations de valeur de courant actuelle du dispositif de sommet de tour en réglant la tension de commande $V_c$ de la fausse charge conçue pour simuler le courant de fonctionnement du dispositif de sommet de tour en fonction d'une deuxième relation correspondante entre la tension de commande $V_c$ de la fausse charge et le courant $I_{vin}$ du port d'entrée de la fausse charge.

9. Appareil selon la revendication 8, dans lequel le module de sommet de tour (201) comprend une pluralité de circuits d'échantillonnage reliés à chaque MCU de sommet de tour, respectivement, et une MCU de sommet de tour ;

chaque circuit d'échantillonnage est conçu pour échantillonner en temps réel un courant de fonctionnement du dispositif de sommet de tour qui lui est relié pour obtenir une valeur de courant actuelle du dispositif de sommet de tour, convertir la valeur de courant obtenue par l'échantillonnage en une valeur de tension correspondante et l'envoyer à la MCU de sommet de tour ; et

la MCU de sommet de tour est conçue pour déterminer des informations de valeur de courant correspondant à la valeur de tension selon une relation correspondante entre la tension et le courant, et envoyer les informations de valeur de courant à la MCU de base de tour.

10. Appareil selon la revendication 8, dans lequel la deuxième relation correspondante est

$$\frac{\sqrt{R \times V_{vin} \times I_{vin} \times \eta} - V_{adj}}{R1} + \frac{V_C - V_{adj}}{R3} = \frac{V_{adj}}{R2},$$ où R1, R2 et R3 sont des résistances de configuration, R est une résistance de consommation d'énergie, $V_{adj}$ est une tension de rétroaction standard, $V_{vin}$ est une tension fournie pour le port d'entrée de la fausse charge par la station de base, et $\eta$ est un rendement de conversion de la fausse charge.

| Obtain present current value information of each tower-top device by detecting a working current of each tower-top device in real time | 101 |

According to the present current value information of each tower-top device, control a fake load configured to simulate the working current of the tower-top device to make a current of an input port of the fake load equal to the present current value information of the tower-top device, so that a base station without an AISG protocol communication function learns the present current value information of the tower-top device by detecting the current of the input port of the fake load simulating the tower-top device, and determines whether the tower-top device is faulty according to the present current value information of the tower-top device | 102 |

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002132644 A1

- US 2010113097 A1